# EUROPÄISCHE PATENTSCHRIFT

(11) **EP 0 457 208 B1**
(45) Veröffentlichungstag und Bekanntmachung des Hinweises auf die Patenterteilung: **12.04.1995**
(21) Anmeldenummer: 91107592.7
(22) Anmeldetag: 10.05.1991
(51) Int. Cl.: H02P 9/08

(54) **Startvorrichtung für Anlasser an Turbinentriebwerken**
Starting device for the starter motor of a turbine engine
Dispositif de démarrage pour le démarreur d'un moteur à turbine

(30) Priorität: 17.05.1990 DE 4015885
(43) Veröffentlichungstag der Anmeldung: 21.11.1991
(73) Patentinhaber: BMW ROLLS-ROYCE GmbH, 61402 Oberursel (DE)
(72) Erfinder: Haselbauer, Franz, W-6309 Münzenberg 1 (DE); Langhardt, Dieter, Dr., W-6370 Oberursel (DE)
(74) Vertreter: Bücken, Helmut

(56) Entgegenhaltungen:
- US-A- 3 812 378
- Irwin E. Treager : "Aircraft Gas Turbine Engine Technology", Second Edition, 1979, McGraw-Hill Book Company, NY, US, pp. 307-312.

## Beschreibung

Die Erfindung betrifft eine Vorrichtung für ein zuverlässiges Betreiben eines Anlassers eines Turbinentriebwerkes.

Ein üblicher Stand der Technik ist es, in den Anlasserstromkreis eines Turbinentriebwerkes einen oder mehrere Vorwiderstände anzuordnen, die den Einschaltstrom des Anlassers begrenzen. Diese Anordnung von Vorwiderständen in dem Anlasserstromkreis weist jedoch die folgenden Nachteile auf:
- Verlust von Energie bei Umsetzung von elektrischer Energie im Vorwiderstand in Wärmeenergie,
- bei tiefen Temperaturen verhindert der Vorwiderstand einen erfolgreichen Triebwerkstart,
- Durchbrennen des Vorwiderstandes bei blockiertem Anlasser,
- Start- und Zündvorgang sind nicht optimal aufeinander abgestimmt. Bei zu schnellem Start kann es vorkommen, daß das Turbinentriebwerk zu schnell den Zünddrehzahlbereich durchläuft und dann nicht mehr zünden kann.

Ohne im Anlasserstromkreis angeordneten Vorwiderstände zur Begrenzung des Einschaltstroms ist eine Überdimensionierung der Geräte, die mit dem (elektrischen) Anlasser in Verbindung stehen, erforderlich. Diese Überdimensionierung führt zu einem hohen Gewicht, was sich gerade beim Einsatz der Geräte in der Luftfahrttechnik nachteilig auswirkt.

Der Erfindung liegt daher die Aufgabe zugrunde, eine Vorrichtung für ein zuverlässiges Betreiben eines Anlassers eines Turbinentriebwerkes bereitzustellen, die raum- und gewichtssparend ausgebildet ist.

Diese Aufgabe wird durch die Merkmale des Patentanspruchs 1 gelöst.

Zu diesem Zweck ist ein elektronisches Vorschaltgerät anstelle eines Vorwiderstandes oder mehrerer Vorwiderstände im Anlasserstromkreis angeordnet, das den Anlasserstrom begrenzt und/oder konstant hält. Diese Anordnung hat die Vorteile, daß:
- in dem elektronischen Vorschaltgerät wenig Energieverlust in Form von Wärmeenergie auftritt,
- beim Blockieren des Anlassers eine Strombegrenzung durch das elektronische Vorschaltgerät erfolgt, und ein Durchbrennen des Anlassers verhindert wird,
- eine optimale Auslegung von Anlasser und den mit dem Anlasser in Verbindung stehenden Geräte (beispielsweise Freilauf, Getriebe) möglich ist, damit diese zur Raum- und Gewichtsersparnis nicht überdimensioniert werden müssen,
- sich immer ein konstanter Drehmomentverlauf am Anlasser ergibt, woraus ein geringerer Verschleiß des Anlassers resultiert, Das elektronische Vorschaltgerät begrenzt den Anlasserstrom auf einen maximalen Wert. Dieser maximale Wert kann entweder konstant sein (ein im Vorschaltgerät intern eingestellter Wert) oder extern an dem elektronischen Vorschaltgerät vorgegeben werden.

In Weiterbildung der Erfindung ist das elektronische Vorschaltgerät zwischen dem Schaltkontakt eines Anlasserschützes und dem Anlasser angeordnet. Es ist vorzugsweise mit einer ersten Anschlußleitung, die mit dem Anlasser verbunden ist, über diesen mit einem Pol der Spannungsquelle, vorzugsweise dem Minus-Pol, verbunden. Die zweite Anschlußleitung ist über den Schaltkontakt des Anlasserschützes mit dem zweiten Pol der Spannungsquelle, vorzugsweise dem Plus-Pol, verbunden. Zur Spannungsversorgung des elektronischen Vorschaltgerätes ist eine Versorgungsleitung des elektronischen Vorschaltgerätes mit einem Pol der Spannungsquelle direkt verbunden. Wenn nun das Anlasserschütz seinen Schaltkontakt schließt, erhält das elektronische Vorschaltgerät seine Spannungsversorgung direkt aus der Spannungsquelle und die Strombegrenzung/Stromkonstanthaltung im Anlasserstromkreis kann erfolgen. Soll das elektronische Vorschaltgerät nicht über den Kontakt des Anlasserschützes eingeschaltet werden, so ist eine externe Stomversorgung für das elektronische Vorschaltgerät denkbar, die beispielsweise von einer Steuereinrichtung eingeschaltet werden kann.

In Weiterbildung der Erfindung ist das elektronische Vorschaltgerät als getaktetes Netzgerät ausgelegt. Ein getaktetes Netzgerät kann so geschaltet werden, daß es eine ausgeprägte Spannungs-Strom-Charakteristik hat, wodurch das getaktete Netzgerät als Konstantstromquelle wirkt.

In Weiterbildung der Erfindung ist das elektronische Vorschaltgerät mit einer Steuereinrichtung verbunden, die den Hochlauf des Turbinentriebwerkes steuert. Somit ist es möglich, das Turbinentriebwerk während des Hochlaufes bei optimaler Zünddrehzahl verweilen zu lassen, bis die Zündung erfolgt ist, und es dann weiter zu beschleunigen. Zu diesem Zweck weist die Steuereinrichtung Geber zur Erfassung von Betriebsparametern des Turbinentriebwerkes auf. Als ein Betriebsparameter kann die Drehzahl des Turbinentriebwerkes herangezogen werden. Als weitere Betriebsparameter können Temperatur- oder Druckverhältnisse des Turbinentriebwerkes verwendete werden, die in der Steuereinrichtung verarbeitet werden und eine präzise Steuerung beziehungsweise Regelung des Anlaß- oder Zündvorganges des Turbinentriebwerkes ermöglichen.

Weitere Merkmale der Erfindung ergeben sich aus der folgenden Beschreibung und der Zeichnung, in der ein Ausführungsbeispiel der Erfindung schematisch dargestellt ist.

Es zeigen:
- Fig.1:: Netz- und Anlasserkennlinien nach dem Stand der Technik,
- Fig.2:: Anordnung des elektronischen Vorschaltgerätes im Anlasserstromkreis,
- Fig.3:: Netzkennlinie eines getakteten Netzgerätes,
- Fig.4:: Diagramm des Drehmomentverlaufes über der Drehzahl ohne und mit Strombegrenzung.

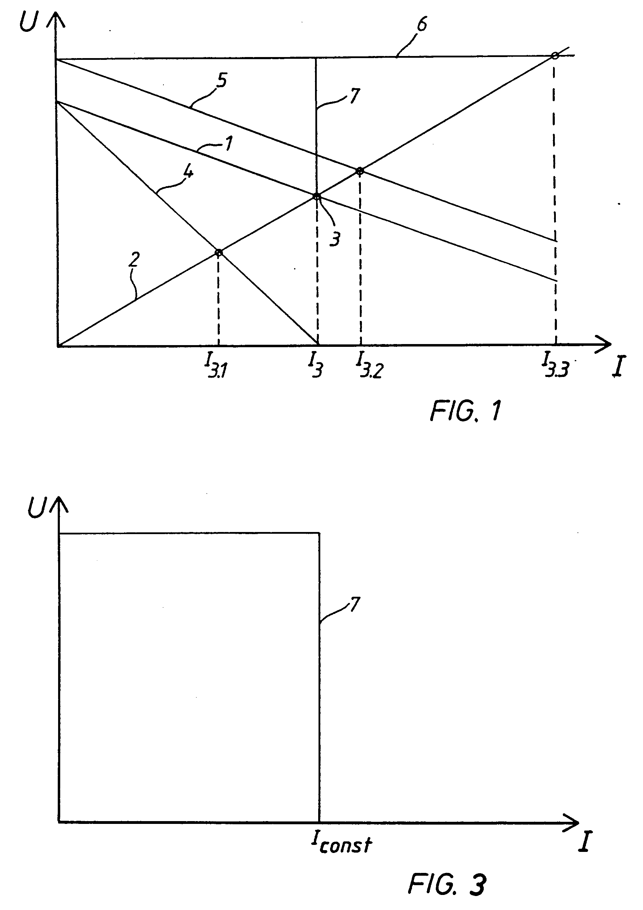

Elektrische Anlasser an Turbinentriebwerken, insbesondere an solchen für Luftfahrtanwendungen, sind so ausgelegt, daß sie mit einer ganz bestimmten Netzkennlinie optimales Verhalten zeigen. Das heißt, daß die elektrischen Anlasser damit die Turbinentriebwerke sicher starten können. In Figur 1 ist eine typische Netzkennlinie 1 und eine typische Anlasserkennlinie 2 gezeigt. Dazu ist die Spannung U auf der Ordinate über dem Strom I auf der Abszisse aufgetragen. Aus einem Schnittpunkt 3 der Netzkennlinie 1 und der Anlasserkennlinie 2 ergibt sich der Einschaltstrom 13 des Anlassers. Die Praxis hat gezeigt, daß sich die Netzkennlinie 1 sehr stark mit der Temperatur und Gleichspannungsquelle mit dem Ladezustand der Batterie ändern kann. Bei Extremwerten der Netzkennlinie 4 oder 5 (beispielsweise bei tiefen (4) oder hohen (5) Temperaturen) wird der Anlasser entweder mit einem höheren Strom I_{3.2} belastet, so daß sich dessen Lebensdauer stark reduziert, oder der sich aus dem Schnittpunkt von Netzkennlinie 4 und Anlasserkennlinie 2 resultierende Strom I_{3.1} (und die sich daraus ergebende Spannung) ist zu gering für einen zuverlässigen Betrieb des Anlassers. Dabei ist eine Überhitzung des elektrischen Anlassers durch einen zu hohen Einschaltstrom oder durch eine zu lange Laufzeit möglich. Besonders extrem ist die Verwendung eines Bodenaggregates zum Start eines Turbinentriebwerkes für ein Fluggerät. Hierbei ergibt sich eine Netzkennlinie 6 und es ist mit etwa dem doppeltem Anlasserstrom I_{3.3} für den Anlasser zu rechnen. Dieser hohe Einschaltstrom verbrennt den Kollektor im Anlasser. Er reduziert dessen Lebensdauer drastisch. Der hohe Einschaltstrom bewirkt auf ein hohes Anfahrdrehmoment, welches Freilauf und Getriebe überlasten kann. Für ein sicheres und zuverlässiges Betreiben eines Anlassers ist daher eine Netzkennlinie 7 optimal geeignet, da hier immer ein konstanter Strom I₃ fließt.

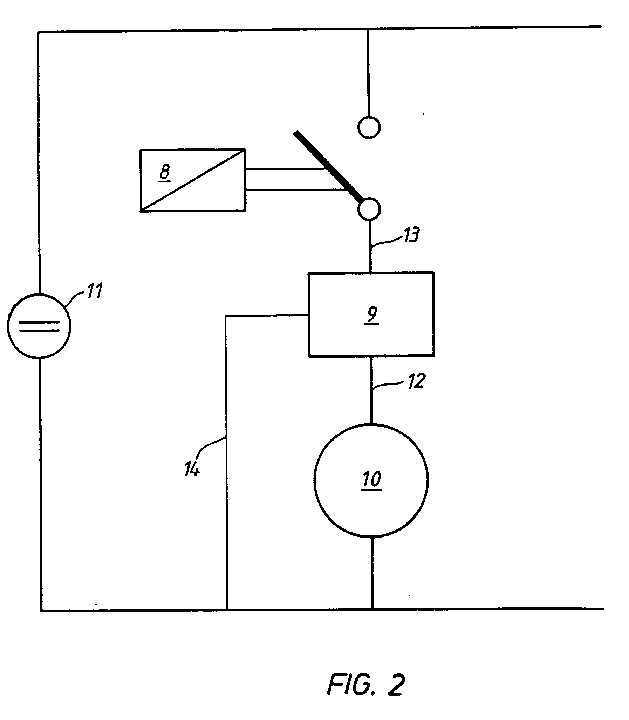

Fig.2 zeigt die bevorzugte Anordnung des elektronischen Vorschaltgerätes 9 im Anlasserstromkreis. Über eine erste Anschlußleitung 12 ist das elektronische Vorschaltgerät 9 mit einem Anlasser 10 verbunden, der mit dem Minus-Pol einer Spannungsquelle 11 in Verbindung steht. Über eine zweite Anschlußleitung 13 ist das elektronische Vorschaltgerät 9 mit dem Schaltkontakt eines Anlasserschützes 8 verbunden, das wiederrum mit dem Plus-Pol der Gleichspannungsquelle 11 in Verbindung steht. Die Stromversorgung des elektronischen Vorschaltgerätes 9 erfolgt über die zweite Anschlußleitung 13 sowie über eine Versorgungsleitung 14, die mit dem Minus-Pol der Spannungsquelle 11 verbunden ist. Nach dem Schließen des Schaltkontaktes des Anlasserschützes 8 wird das elektronische Vorschaltgerät 9 über die zweite Anschlußleitung 13 und die Versorgungsleitung 14 mit Spannung versorgt, so daß eine Strombegrenzung im Anlasserstromkreis erfolgen kann.

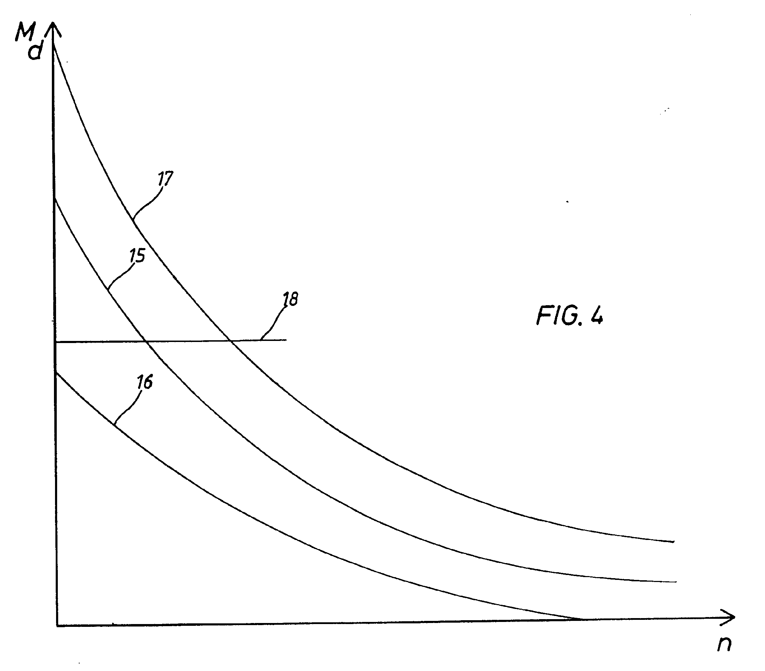

Fig.3 zeigt ausschnittsweise aus Fig.1 die ausgeprägte Spannungs-Strom-Charakteristik des als getaktetes Netzgerät geschalteten elektronischen Vorschaltgerätes 9, das erfindungsgemäß im Anlasserstromkreis angeordnet ist und bei einem bestimmten Strom (I_{const}) eine senkrechte Kennlinie 7 aufweist.

In Fig.4 sind Drehmomentverläufe ohne Strombegrenzung nach dem Stand der Technik sowie ein Drehmomentverlauf mit Strombegrenzung, die sich aus der erfindungsgemäßen Anordnung des elektronischen Vorschaltgerätes 9 im Anlasserstromkreis ergibt, gezeigt. In dieser Fig.4 ist die Drehzahl n auf der Ordinate und das Drehmoment M_{d} auf der Abszisse aufgetragen. Für die typische Netzkennlinie 1 ergibt sich ein typischer Drehmomentverlauf 15 ohne Strombegrenzung in Abhängigkeit von der Drehzahl. Aus den Extremwerten der Netzkennlinien 4 oder 5 resultieren die Drehmomentverläufe 16 oder 17 ohne Strombegrenzung. Ein konstanter Drehmomentverlauf 18 ergibt sich durch die Strombegrenzung/Stromkonstanthaltung, die durch das im Anlasserstromkreis angeordnete elektronische Vorschaltgerät 9 erfolgt. Je nach Höhe der maximalen Strombegrenzung, die einstellbar sein kann, verschiebt sich der daraus resultierende Drehmomentverlauf parallel zum Drehmomentverlauf 18 mit Strombegrenzung.

## Patentansprüche

1. Vorrichtung zum Anlassen eines Turbinentriebwerkes, vorzugsweise eines Gasturbinentriebwerkes, mit einem Anlasserstromkreis, der ein Anlasserschütz (8) und einen Anlasser (10) aufweist, wobei der Anlasserstromkreis aus einer Spannungsquelle (11), vorzugsweise aus einer Gleichspannungsquelle, versorgt wird und der Anlasser (10) über das in dem Anlasserstromkreis angeordneten Anlasserschütz (8) mit der Spannungsquelle (11) verbindbar ist,
dadurch gekennzeichnet, daß in dem Anlasserstromkreis ein elektronisches Vorschaltgerät (9) angeordnet ist, welches den im Anlasserstromkreis fließenden Anlasserstrom begrenzt und auf einem vorgebbaren Wert konstant hält.

2. Vorrichtung nach Anspruch 1,
dadurch gekennzeichnet, daß das elektronische Vorschaltgerät (9) zwischen dem Anlasserschütz (8) und dem Anlasser (10) angeordnet ist.

3. Vorrichtung nach Anspruch 1 oder 2,
dadurch gekennzeichnet, daß das elektronische Vorschaltgerät (9) ein getaktetes Netzgerät ist und als Stromquelle arbeitet.

4. Vorrichtung nach Anspruch 1, 2 oder 3,
dadurch gekennzeichnet, daß zumindest eine Versorgungsleitung (14) des elektronischen Vorschaltgerätes (9) mit einem Pol der Spannungsquelle (11) direkt verbunden ist.

5. Vorrichtung nach einem der vorhergehenden Ansprüche,
dadurch gekennzeichnet, daß das elektronische Vorschaltgerät (9) mit einer Steuereinrichtung verbunden ist, die den Hochlauf des Turbinentriebwerkes steuert.

6. Vorrichtung nach Anspruch 5,
dadurch gekennzeichnet, daß die Steuervorrichtung Geber zur Erfassung von Betriebsparametern des Turbinentriebwerkes aufweist.

## Claims

1. A device for starting a turbine engine, preferably a gas turbine engine, comprising a starter motor circuit having a starter relay (8) and a starter motor (10), the starter motor circuit being energised by a voltage source (11), preferably a DC voltage source, and the starter motor (10) being connectable to the voltage source (11) via a starter relay (8) disposed in the starter motor circuit, characterised in that an electronic power supply device (9) is disposed in the starter motor circuit and limits the starter current flowing in the starter motor circuit and keeps it constant at a presettable value.

2. A device according to claim 1, characterised in that the electronic power supply device (9) is disposed between the starter relay (8) and the starter motor (10).

3. A device according to claim 1 or 2, characterised in that the electronic power supply device (9) is a clock-controlled mains unit and operates as a source of current.

4. A device according to claim 1, 2 or 3, characterised in that at least one supply line (14) supplying the electronic power supply device (9) is directly connected to one terminal of the voltage source (11).

5. A device according to any one of the preceding claims, characterised in that the electronic power supply device (9) is connected to a control device which controls the process of starting the turbine engine.

6. A device according to claim 5, characterised in that the control device comprises pick-ups or sensors for detecting operating parameters of the turbine engine.

## Revendications

1. Dispositif pour le démarrage d'un moteur à turbine, de préférence d'un moteur à turbine à gaz, avec un circuit de démarreur qui comporte une protection (8) du démarreur et un démarreur (10), tandis que le circuit du démarreur est alimenté à partir d'une source de tension (11), de préférence à partir d'une source de tension continue, et que le démarreur (10) est susceptible d'être relié à la source de tension (11) par l'intermédiaire de la protection (8) du démarreur disposée dans le circuit du démarreur,
dispositif caractérisé en ce que dans le circuit du démarreur est disposé un régulateur électronique (9), qui limite le courant du démarreur circulant dans le circuit du démarreur et le maintient constant à une valeur susceptible d'être prédéfinie.

2. Dispositif selon la revendication 1 caractérisé en ce que le régulateur électronique (9) est disposé entre la protection (8) du démarreur et le démarreur (10).

3. Dispositif selon la revendication 1 ou la revendication 2 caractérisé en ce que le régulateur électronique (9) est une unité d'alimentation de courant synchronisée et fonctionne comme une source de courant.

4. Dispositif selon la revendication 1, la revendication 2 ou la revendication 3 caractérisé en ce que au moins une ligne d'alimentation (14) du régulateur électronique (9) est directement reliée à un pôle de la source de tension (11).

5. Dispositif selon une des précédentes revendications caractérisé en ce que le régulateur électronique (9) est relié à un dispositif de commande qui commande le régime élevé du moteur à turbine.

6. Dispositif selon la revendication 5 caractérisé en ce que le dispositif de commande comporte des détecteurs pour détecter des paramètres de fonctionnement du moteur à turbine.
